# EUROPÄISCHE PATENTSCHRIFT

(11) **EP 1 174 389 B1**
(45) Veröffentlichungstag und Bekanntmachung des Hinweises auf die Patenterteilung: **12.01.2005**
(21) Anmeldenummer: 01112340.3
(22) Anmeldetag: 21.05.2001
(51) Int. Cl.: C01B 15/043

(54) **Gecoatete Metallperoxide**
Coated metal peroxides
Peroxydes metalliques enrobés

(30) Priorität: 18.07.2000 DE 10035287
(43) Veröffentlichungstag der Anmeldung: 23.01.2002
(73) Patentinhaber: Solvay Interox GmbH, 30173 Hannover (DE)
(72) Erfinder: Dötsch, Werner, Dr., 53547 Linz a. Rhein (DE); Wasem, Gabriele, 53547 Hausen (DE)
(74) Vertreter: Gosmann, Martin, Dr.

(56) Entgegenhaltungen:
- EP-A- 0 002 543
- US-A- 4 867 902
- US-A- 5 690 701

## Beschreibung

Die Erfindung bezieht sich auf gecoatete Metallperoxide, deren Herstellung und Verwendung.

Metallperoxide, insbesondere Magnesium-, Zink- und Calciumperoxid oder Mischperoxide, sind im Stand der Technik bekannt und werden als Sauerstoffdonatoren in vielfältigen Anwendungen eingesetzt. So werden Erdalkaliperoxide für medizinische und pharmazeutische Zwecke sowie in der Kosmetik eingesetzt. Weiterhin ist der Einsatz der Peroxide in Zahnpasten, zur Brotherstellung oder Saatgutaufbereitung bekannt. Auch in der Abwassertechnik oder Bodensanierung macht man sich die Möglichkeit der langsamen Sauerstoffabgabe von Peroxidverbindungen zunutze.

Alkali- und Erdalkaliperoxide werden im allgemeinen hergestellt, indem man aus wäßrigen Lösungen bzw. Suspensionen ihrer Salze, Oxide oder Hydroxide durch Umsetzung mit wäßriger Wasserstoffperoxidlösung peroxidhaltige Reaktionsmischungen herstellt und diese trocknet.

Gemäß DE 29 18 137 wird eine konzentrierte Alkali- oder Erdalkalioxid- oder -hydroxid-Suspension mit wäßriger Wasserstoffperoxidlösung zur Reaktion gebracht und anschließend einer Sprühtrocknung unterworfen.

Aus DE 30 25 682 ist bekannt, ein festes, wasserfreies oder hydratisiertes Oxid oder Hydroxid in einer Intensiv-Mischapparatur direkt mit Wasserstoffperoxid umzusetzen und das Reaktionsprodukt in einem Kurzzeittrockner zu trocknen.

DE 196 50 686 beschreibt ein Verfahren zur Herstellung von homogenen Ca/Mg-Peroxiden durch Umsetzung einer wäßrigen Suspension von Calciumhydroxid und Magnesiumoxid und/oder Magnesiumhydroxid mit einer Wasserstoffperoxidlösung und anschließender Trocknung des gebildeten Calcium/Magnesium-Peroxid.

Es ist ebenfalls bekannt, die langsame Freisetzung des Sauerstoffs durch Coating der Peroxide weiter zu verzögern.

Gemäß US-PS 4,293,426 werden Calciumperoxidpartikel in Gegenwart von wasserunlöslichen Verbindungen granuliert. Als wasserunlösliche Verbindungen werden hier organische Polymere oder anorganische Verbindungen eingesetzt. Diese Verbindungen haben eine Wasserlöslichkeit von weniger als 1 % und einen Schmelzpunkt von mindestens 50 °C. In an sich bekannter Weise erfolgt hier die Beschichtung der Peroxidpartikel während des Granulierprozesses.

Die Aufgabe der Erfindung besteht darin, Metallperoxide bereitzustellen, die im feuchten Medium stabil sind, wodurch deren Sauerstofffreisetzung stark verzögert wird.

Die Aufgabe wird durch Hydrophobierung der Metallperoxidpartikel gelöst, indem eine Metallperoxidsuspension vor der Trocknung mit einem geeigneten Coatingmittel versetzt wird.

Die Metallperoxidsuspension wird analog den in DE 29 18 137, DE 30 25 682 und DE 196 50 686 beschriebenen Verfahren durch Umsetzung der entsprechenden Metalloxide und/oder -hydroxide mit Wasserstoffperoxid hergestellt. In die so gebildete peroxidhaltige Suspension wird das Coatingmittel direkt eingemischt. Die mit dem Coatingmittel beaufschlagte Peroxidsuspension wird in einem Kurzzeittrockner, z. B. Sprühtrockner, getrocknet. Im Gegensatz zu US-PS 4,293,426 ist somit gewährleistet, daß die Korngröße der Metallperoxide erhalten bleibt. Es bilden sich keine Agglomerate. Das Coatingmittel umschließt direkt die Primärkörner. Als Coatingmittel im Sinne der Erfindung sind Siliconverbindungen aus der Gruppe Siliconate, Wasserstoff/Polysiloxane/Emulsionen, Siloxane, Siloxane auf Trägermaterial, Siliconharzemulsionen, Silan/Siloxan-Gemische, Silicon-Microemulsionskonzentrate, Kieselsäureestergemisch, geeignet. Erfindungsgemäß werden in die Metallperoxidsuspension bis 10 Gew.-% (bezogen auf Feststoff) Coatingmittel unter Rühren eingebracht.

In einer Ausführungsform der Erfindung wird ein Silicon-Microemulsionskonzentrat auf Silan/Siloxanbasis als Coatingmittel verwendet.

In einer Ausführungsform der Erfindung wird Silicon-Microemulsionskonzentrat auf Silan/Siloxanbasis unter Rühren in einer Menge bis 10 Gew.-%, vorzugsweise in einer Menge bis 2 Gew.-%, bezogen auf das Festprodukt, in die Metallperoxidsuspension eingetragen.

Als Silicon-Microemulsionskonzentrat auf Silan/Siloxanbasis wird ein wasserverdünnbares Silan/Siloxan-Kunstharzgemisch, vorzugsweise ein Alkylsiliconharz mit Alkoxygruppen, insbesondere ein teilneutralisiertes aminofunktionelles Polydimethylsiloxan verstanden.

Als Metallsalze werden vorzugsweise Erdalkalioxide und Erdalkalihydroxide, insbesondere Calciumhydroxid bzw. Calciumoxid, Magnesiumoxid bzw. Magnesiumhydroxid, eingesetzt. Zinkoxid ist ebenfalls zur Herstellung der erfindungsgemäßen Peroxide geeignet.

Gegebenenfalls können der Metallperoxidlösung zusätzlich geringe Mengen der bei der Herstellung anorganischen Persauerstoffverbindungen üblichen Additive und/oder Stabilisatoren zugesetzt werden.

Solche Additive sind z. B. Wasserglas bzw. übliche Aktivsauerstoffstabilisatoren wie z. B. handelsübliche Phosphonsäuren und deren Salze.

Die erfindungsgemäß gecoateten hydrophobierten Metallperoxide werden in an sich üblicher Weise durch Verdampfung des Wassers bei gleichzeitiger Trocknung des Reaktionsproduktes in einem Kurzzeittrockner, insbesondere in einem Sprühtrockner oder in einem Spin-Flash-Trockner, getrocknet.

Die gecoateten hydrophobierten Metallperoxide können je nach Verwendungszweck in üblicher Weise konfektioniert werden.

Es wurde gefunden, daß die erfindungsgemäß gecoateten Metallperoxide eine gegenüber den bekannten unbehandelten Produkten erheblich verzögerte Sauerstoffabgabe aufweisen. Aufgrund der verzögerten Freisetzung von Sauerstoff sind die erfindungsgemäßen Peroxide besonders geeignet den aeroben Prozeß der Bioremediation zu unterstützen und somit die Bodensanierung effektiver zu gestalten.

Als weiterer positiver Effekt wurde gefunden, daß die erfindungsgemäß hydrophobierten Erdalkaliperoxide ein verbessertes Fließverhalten aufweisen.

Aufgrund des verbesserten Fließverhaltens lassen sich z. B. diese Produkte zur Bioremediation von Böden sehr einfach und ohne größeren technischen Aufwand in das Erdreich einbringen.

Die nachfolgenden Beispiele sollen die Erfindung erläutern, ohne sie in ihrem Umfang einzuschränken.

### Beispiel 1:

### Herstellung von hydrophobiertem CaO₂

In einem Ansatzbehälter wurde durch gleichzeitiges Zudosieren von Wasser und Ca(OH)₂-Pulver unter Rühren eine Ca(OH)₂-Suspension hergestellt, die 400 g/l Ca(OH)₂ enthielt. 3.200 l dieser Suspension wurden mit 800 1 60%iger stabilisierter Wasserstoffperoxidlösung in einem zweiten Reaktor zu CaO₂ umgesetzt. Durch externe Kühlung wurde die Temperatur der Reaktionslösung auf <35°C gehalten. Die ausreagierte CaO₂-Suspension wurde mit 1 % Silicon-Microemulsionskonzentrat SMK2101 (Fa. Wacker), bezogen auf den Feststoff, versetzt und in einem Sprühtrockner bei einer Ablufttemperatur von 110 bis 120 °C getrocknet.

Das so hergestellte Produkt weist einen Gehalt von 79 Gew.-% CaO₂ auf.

### Beispiel 2:

### Herstellung von hydrophobiertem MgO₂

In einem Ansatzbehälter wurde durch gleichzeitiges Zudosieren von Wasser und MgO-Pulver unter Rühren eine MgO-Suspension hergestellt, die 300 g/l MgO enthielt. Diese Suspension wurde mit 60%iger stabilisierter Wasserstoffperoxidlösung in einem zweiten Reaktor zu MgO₂ umgesetzt, wobei darauf zu achten war, daß stets ein Überschuß von >10 g/l bis <50 g/l H₂O₂ in der Suspension vorlag. Durch externe Kühlung wurde die Temperatur der Reaktionslösung auf <20 °C gehalten. Die ausreagierte MgO₂-Suspension wurde mit 2 % Silicon-Microemulsionskonzentrat SMK2101 (Fa. Wacker), bezogen auf Feststoff, versetzt und in einem Sprühtrockner bei einer Ablufttemperatur von 140 bis 150 °C getrocknet.

Das so hergestellte Produkt wies einen Gehalt von 29,5 % MgO₂ auf.

### Beispiel 3:

### Herstellung von hydrophobiertem Ca/Mg-Peroxid

In einem Reaktionsbehälter, in dem sich ca. ¹/₂₀ der im Reaktionsansatz benötigten Gesamtmenge einer 60 gew.-%igen H₂O₂-Lösung als Vorlage befindet, wurde simultan eine Supensionsmischung aus 12,1 kg Ca(OH)₂ und 1,2 kg Mg(OH)₂ mit 8,7 kg H₂O₂ (60 Gew.-%) sowie 140 ml Natrium-Wasserglaslösung unter Kühlen (T<40 °C) und Rühren umgesetzt.

Die ausreagierte Ca/Mg-Peroxidsuspension mit einem Feststoffgehalt von 300 g/l wurde mit 1 % Silicön-Microemulsionskonzentrat SMK2101 (Fa. Wacker), bezogen auf den Feststoffgehalt, versetzt und in einem Sprühtrockner bei einer Ablufttemperatur von 120 - 140 °C getrocknet. Das Mischperoxid wies einen Gehalt von 46,2 % CaO₂ sowie 4,2 % MgO₂ auf.

### Beispiel 4:

### Bestimmung der Reaktivität

In 200 ml NaAsO₂-Lösung (0,06 mol/l NaAsO₂), die durch Zugabe von NaHCO₃ auf einen pH-Wert von 8 eingestellt wurde, wurden 0,5 g der zu untersuchenden Peroxidprobe mittels Magnetrührer suspendiert. In festgelegten Zeitintervallen wurden Proben entnommen und der überschüssige Anteil an NaAsO₂ mit Jodlösung zurücktitriert.

Aus dem so bestimmten Peroxidgehalt sowie dem Ausgangswert wurde der umgesetzte Anteil (entspricht der Reaktivität) in Prozent errechnet.

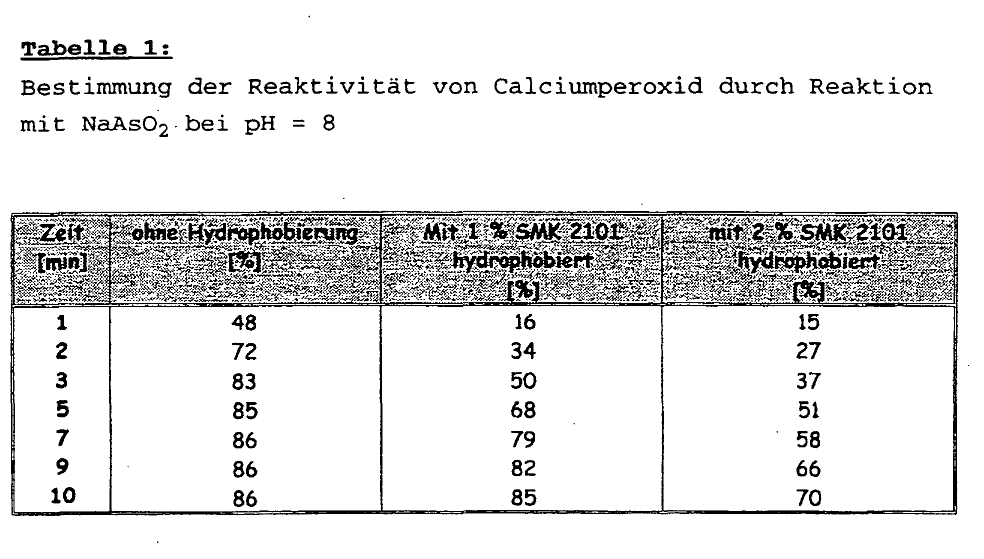

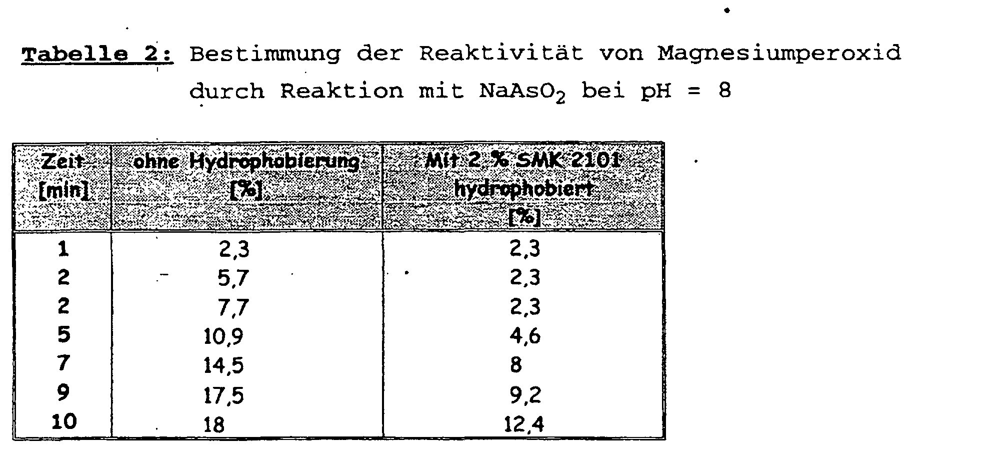

### Beispiel 5:

### Bestimmung des Fließverhaltens

In einem am Auslauf verschlossenen Glastrichter (Gesamthöhe 300 mm, Trichterauslauflänge 150 mm, Auslaufdurchmesser 12 mm, oberer Trichterdurchmesser 150 mm) der senkrecht 45 mm über einer mit Schmirgelleinen belegten Fläche positioniert war, wurden 50 g der zu untersuchenden Probe gegeben.

Nach Öffnen des Auslaufrohrs wurde die Ausbreitungsfläche (a in mm²) der auf der Platte ausgeflossenen Probe bestimmt

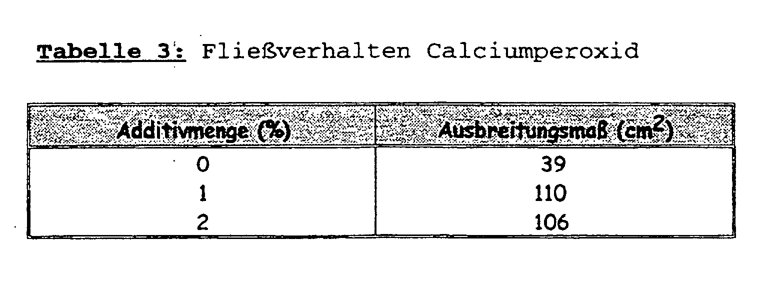

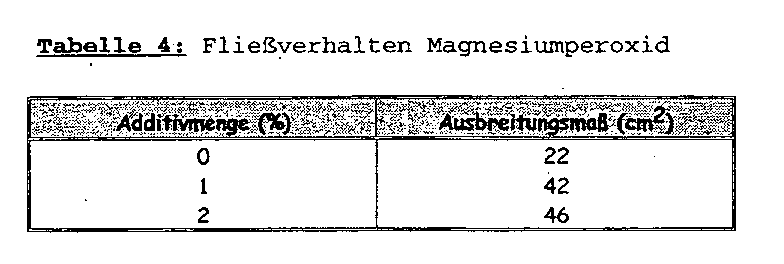

## Patentansprüche

1. Gecoatetes Metallperoxid enthaltend Siliconverbindungen aus der Gruppe Siliconate, Wasserstoff-Polysiloxane, Siloxane, Siliconharzemulsionen, Silan/Siloxan-Emulsionen, Silan/Siloxan-Gemische, Silicon-Microemulsionskonzentrate, Kieselsäureestergemische als Coatingmittel.

2. Gecoatetes Metallperoxid nach Anspruch 1, **dadurch gekennzeichnet, daß** das Metallperoxid Erdalkaliperoxid, insbesondere Calium- und/oder Magnesiumperoxid oder ein Ca/Mg-Mischperoxid ist.

3. Gecoatetes Metallperoxid nach Anspruch 1, **dadurch gekennzeichnet, daß** das Metallperoxid Zinkperoxid ist.

4. Verfahren zum Coaten von Metallperoxiden, **dadurch gekennzeichnet, daß** in eine Metallperoxidsuspension bis 10 Gew.-% (bezogen auf Feststoff) einer Siliconverbindung aus der Gruppe Siliconate, Wasserstoff-Polysiloxane, Siloxane, Siliconharzemulsion, Silan-/Siloxan-Emulsion, Silan-/Siloxan-Gemische, Silicon-Microemulsionskonzentrate, Kieselsäureestergemische unter Rühren eingebracht und das gecoatete Metallperoxid getrocknet wird.

5. Verfahren zum Coaten von Metallperoxiden nach Anspruch 4, **dadurch gekennzeichnet, daß** in eine Magnesium-, Ca/Mg-, Zn- und/oder Calciumperoxidsuspension bis 10 Gew.-% der Siliconverbindung (bezogen auf Feststoff) unter Rühren eingebracht und das gecoatete Metallperoxid getrocknet wird.

6. Verfahren zum Coaten von Metallperoxiden nach Anspruch 4 und 5, **dadurch gekennzeichnet, daß** in eine Metallperoxidsuspension bis 2 Gew.-% (bezogen auf Feststoff) Silicon-Microemulsionskonzentrat unter Rühren eingebracht und das gecoatete Metallperoxid getrocknet wird.

7. Verwendung der gecoateten Metallperoxide gemäß Anspruch 1 bis 3 zur Bioremediation von Böden.

## Claims

1. Silicone compounds, containing coated metal peroxide, from the group siliconates, hydrogen-polysiloxanes, siloxanes, silicone resin emulsions, silane/siloxane emulsions, silane/siloxane mixtures, silicone microemulsion concentrates or silicic acid ester mixtures as coating agent.

2. Coated metal peroxide according to Claim 1, **characterised in that** the metal peroxide is alkaline earth peroxide, in particular calcium and/or magnesium peroxide or a Ca/Mg mixed peroxide.

3. Coated metal peroxide according to Claim 1, **characterised in that** the metal peroxide is zinc peroxide.

4. Process for coating metal peroxides, **characterised in that** up to 10% by weight (relative to solid) of a silicone compound from the group siliconates, hydrogen-polysiloxanes, siloxanes, silicone resin emulsion, silane/siloxane emulsion, silane/siloxane mixtures, silicone microemulsion concentrates, silicic acid ester mixtures are introduced with stirring into a metal peroxide suspension and the coated metal peroxide is dried.

5. Process for coating metal peroxides according to Claim 4, **characterised in that** up to 10% by weight of the silicone compound (relative to solid) is introduced with stirring into a magnesium, Ca/Mg, Zn and/or calcium peroxide suspension and the coated metal peroxide is dried.

6. Process for coating metal peroxides according to Claims 4 and 5, **characterised in that** up to 2% by weight (relative to solid) silicone microemulsion concentrate is introduced with stirring into a metal peroxide suspension and the coated metal peroxide is dried.

7. Use of the coated metal peroxides according to Claims 1 to 3 for the bioremediation of soils.

## Revendications

1. Peroxyde métallique enrobé contenant des composés de silicone du groupe des siliconates, des hydrogéno-polysiloxanes, des siloxanes, des émulsions de résine de silicone, des émulsions de silane/siloxane, des mélanges de silane/siloxane, des concentrés de micro-émulsion de silicone, des mélanges d'ester d'acide silicique, en tant qu'agent d'enrobage.

2. Peroxyde métallique enrobé selon la revendication 1, **caractérisé en ce que** le peroxyde métallique est un peroxyde alcalino-terreux, en particulier du peroxyde de potassium et/ou de magnésium ou un peroxyde mixte de Ca/Mg.

3. Peroxyde métallique enrobé selon la revendication 1, **caractérisé en ce que** le peroxyde métallique est du peroxyde de zinc.

4. Procédé d'enrobage de peroxydes métalliques, **caractérisé en ce que** l'on introduit sous agitation dans une suspension de peroxyde métallique jusqu'à 10 % en poids (sur la base du solide) d'un composé de silicone issu du groupe des siliconates, des hydrogéno-polysiloxanes, des siloxanes, des émulsions de résine de silicone, des émulsions de silane/siloxane, des mélanges de silane/siloxane, des concentrés de micro-émulsion de silicone, des mélanges d'ester d'acide silicique, et que l'on sèche le peroxyde métallique enrobé.

5. Procédé d'enrobage de peroxydes métalliques selon la revendication 4, **caractérisé en ce que**, dans une suspension de peroxyde de magnésium, de Ca/Mg, de Zn et/ou de calcium, on introduit sous agitation jusqu'à 10 % en poids du composé de silicone (sur la base du solide), et on sèche le peroxyde métallique enrobé.

6. Procédé d'enrobage de peroxydes métalliques selon les revendications 4 et 5, **caractérisé en ce que**, dans une suspension de peroxyde métallique, on introduit sous agitation jusqu'à 2 % en poids (sur la base du solide) d'un concentré de micro-émulsion de silicone, et **en ce que** l'on sèche le peroxyde métallique enrobé.

7. Utilisation des peroxydes métalliques enrobés selon la revendication 1 à 3 pour la biodépollution de corps.
